# EUROPEAN PATENT APPLICATION

(11) **EP 4 637 248 A1**
(43) Date of publication of application: **22.10.2025**
(21) Application number: 23914558.4
(22) Date of filing: 26.12.2023
(51) Int. Cl.: H04W 72/53

(54) **COMMUNICATION METHOD, APPARATUS AND COMPUTER-READABLE STORAGE MEDIUM**

(30) Priority: 06.01.2023 CN 202310018421
(71) Applicant: Huawei Technologies Co., Ltd., Shenzhen, Guangdong 518129 (CN)
(72) Inventor: ZHANG, Chi, Shenzhen, Guangdong 518129 (CN); ZHU, Qianghua, Shenzhen, Guangdong 518129 (CN); LI, Wenzheng, Shenzhen, Guangdong 518129 (CN); ZHOU, Xiaoyun, Shenzhen, Guangdong 518129 (CN); YAN, Yali, Shenzhen, Guangdong 518129 (CN)
(74) Representative: Goddar, Heinz J.
(86) International application number: PCT/CN2023/142149
(87) International publication number: WO 2024/146426

(57) **Abstract**

This application provides a communication method and apparatus, and a computer-readable storage medium. The method includes: An application function network element sends a first request message to a policy control function network element, where the first request message includes a request for subscription to a first event of a terminal device, first indication information, and a notification destination address of the application function network element, and the first indication information indicates to report an event report of the first event in real time and/or indicates to report the event report based on a priority; and receives the event report or a response message indicating that the event report fails to be obtained. According to the technical solutions provided in this application, subscription to an event reporting of the terminal device in a specific application scenario (for example, an industrial scenario) can be supported, so as to improve universality of a communication system.

## Description

This application claims priority to Chinese Patent Application No. 202310018421.6, filed with the China National Intellectual Property Administration on January 6, 2023, and entitled "COMMUNICATION METHOD AND APPARATUS, AND COMPUTER-READABLE STORAGE MEDIUM", which is incorporated herein by reference in its entirety.

### TECHNICAL FIELD

This application relates to the field of wireless communication technologies, and in particular, to a communication method and apparatus, and a computer-readable storage medium.

### BACKGROUND

A 5th generation (5th generation, 5G) local area network (local area network, 5G LAN) service or a 5G virtual network (virtual network, 5GVN) service is a service provided by a current 5G network, and is mainly applied to home communication, enterprise office, factory manufacturing, an internet of vehicles, power grid reconstruction, public security organs, and the like. Currently, an exposure capability of a capability exposure network element (network exposure function, NEF) may be enhanced to meet a potential requirement and provide a traffic characteristic and a monitoring performance characteristic that are applicable to a terminal device in a given group or a specific scenario. An NEF framework allows an external application to subscribe to a feature event notification of the terminal device in the group. For example, an AF may subscribe to a QoS monitoring request of the terminal device, to request a PCF/SMF/UPF on a network side to report QoS monitoring information. A policy of the QoS monitoring request may include a reporting condition of the QoS monitoring information, including four manners: event triggered, periodic reporting, reporting when a measurement result exceeds a threshold, and PDU session release.

However, for example, in an industrial scenario, the QoS monitoring information needs to be reported based on a specific requirement, to meet monitoring requirements of a device and a network management system for connectivity in a scenario such as industrial control. Using only four reporting conditions in an existing mechanism cannot support requirements in more specific application scenarios.

### SUMMARY

Embodiments of this application provide a communication method and apparatus, and a computer-readable storage medium, to support subscription to an event reporting of a terminal device in a specific application scenario (for example, an industrial scenario), so as to improve universality of a communication system.

According to a first aspect, this application provides a communication method. The method may be applied to an application function network element, or may be applied to an apparatus (for example, a chip, a chip system, or a circuit) in the application function network element, or may be applied to an apparatus that can be used in a matching manner with the application function network element. The following uses an example in which the method is applied to the application function network element for description. The method may include: The application function network element sends a first request message to a policy control function network element, where the first request message includes a request for subscription to a first event of a terminal device, first indication information, and a notification destination address of the application function network element, and the first indication information indicates to report an event report of the first event in real time and/or indicates to report the event report based on a priority; and receives the event report or a response message indicating that the event report fails to be obtained.

In the solution provided in this application, two newly added reporting condition types for subscription to the event report of the first event of the terminal device are provided. In addition to four original reporting condition types, real-time reporting of the event report and reporting of the event report of the first event based on the priority are further supported. To be specific, a reporting condition type delivered by an AF is enhanced, to support a requirement for real-time reporting and/or priority-based reporting of the event report in an industrial scenario and another scenario, so as to improve universality of a communication system. In addition, an AF side may receive the response message indicating that the event report fails to be obtained, and the AF supports sensing and determining whether a subsequent request for the first event needs to be further created/updated/released, so that air interface resources can be saved.

In a possible implementation, the first event is quality of service (quality of service, QoS) monitoring.

In a possible implementation, the first indication information indicates to report the event report in real time, and the first indication information includes a time period or a time point for reporting.

In a possible implementation, the first indication information indicates to report the event report based on the priority, and the first indication information includes priority information.

In a possible implementation, receiving the event report or the response message indicating that the event report fails to be obtained includes: receiving, from the policy control function network element, the event report or the response message indicating that the event report fails to be obtained; or receiving, from a session management function network element, the event report or the response message indicating that the event report fails to be obtained.

In a possible implementation, receiving, from the policy control function network element, the event report or the response message indicating that the event report fails to be obtained includes: receiving, from the policy control function network element via a network exposure function network element, the event report or the response message indicating that the event report fails to be obtained; and receiving, from the session management function network element, the event report or the response message indicating that the event report fails to be obtained includes: receiving, from the session management function network element via the network exposure function network element, the event report or the response message indicating that the event report fails to be obtained.

In the solution provided in this application, if the AF is a trusted AF, an event report of a PCF/an SMF on a network side or a response message indicating that the event report fails to be obtained may be directly received. If the AF is an untrusted AF, the event report of the PCF/SMF on the network side or the response message indicating that the event report fails to be obtained may be received via the NEF.

In a possible implementation, sending the first request message to the policy control function network element includes: sending the first request message to the policy control function network element via the network exposure function network element.

In the solution provided in this application, if the AF is a trusted AF, the first request message may be directly sent to the policy control function network element. If the AF is an untrusted AF, the first request message may be sent to the policy control function network element via the NEF.

According to a second aspect, this application provides a communication method. The method may be applied to a policy control function network element, or may be applied to an apparatus (for example, a chip, a chip system, or a circuit) in a policy control function network element, or may be applied to an apparatus that can be used in a matching manner with the policy control function network element. The following uses an example in which the method is applied to the policy control function network element for description. The method may include: The policy control function network element receives a first request message from an application function network element, where the first request message includes a request for subscription to a first event of a terminal device, first indication information, and a notification destination address of the application function network element, and the first indication information indicates to report an event report of the first event in real time and/or indicates to report the event report based on a priority; and sends the event report or a response message indicating that the event report fails to be obtained to the application function network element based on the notification destination address of the application function network element in the first request message.

In the solution provided in this application, a PCF on a network side may send the event report of the first event to an AF. Two newly reporting condition types for subscription to the event report of the first event of the terminal device are added to support a requirement for real-time reporting and/or priority-based reporting of an event report in an industrial scenario and another scenario, so as to improve universality of a communication system. Alternatively, the PCF may send the response message indicating that the event report fails to be obtained to the AF. An AF side may receive, from the PCF on the network side, the response message indicating that the event report fails to be obtained, and the AF supports sensing and determining whether a subsequent request for the first event needs to be further created/updated/released, so that air interface resources can be saved.

It should be understood that an execution entity of the second aspect may be the policy control function network element, and specific content of the second aspect corresponds to content of the first aspect. For corresponding features of the second aspect and beneficial effects achieved by the second aspect, refer to the descriptions of the first aspect. To avoid repetition, detailed descriptions are appropriately omitted herein.

In a possible implementation, the first event is QoS monitoring.

In a possible implementation, the first indication information indicates to report the event report in real time, and the first indication information includes a time period or a time point for reporting.

In a possible implementation, the first indication information indicates to report the event report based on the priority, and the first indication information includes priority information.

In a possible implementation, the method further includes: establishing or updating a policy control and charging (policy control and charging, PCC) rule based on the first request message, and sending the PCC rule to a session management function network element, where the PCC rule includes the request for subscription to the first event of the terminal device and the first indication information, and the PCC rule further includes the notification destination address of the application function network element or a notification destination address of the policy control function network element.

In a possible implementation, sending the event report or the response message indicating that the event report fails to be obtained to the application function network element includes: receiving, from the session management function network element, the event report or the response message indicating that the event report fails to be obtained; and sending the event report or the response message indicating that the event report fails to be obtained to the application function network element.

In a possible implementation, sending the event report or the response message indicating that the event report fails to be obtained to the application function network element includes: sending the event report or the response message indicating that the event report fails to be obtained to the application function network element via a network exposure function network element.

In the solution provided in this application, if the AF is a trusted AF, the PCF on the network side may directly send the event report or the response message indicating that the event report fails to be obtained to the AF. If the AF is an untrusted AF, the PCF on the network side may send the event report or the response message indicating that the event report fails to be obtained to the AF via an NEF.

In a possible implementation, receiving the first request message from the application function network element includes: receiving the first request message from the application function network element via the network exposure function network element.

In the solution provided in this application, if the AF is a trusted AF, the PCF on the network side may directly receive the first request message from the AF. If the AF is an untrusted AF, the PCF on the network side may receive the first request message from the AF via the NEF.

According to a third aspect, this application provides a communication method. The method may be applied to a session management function network element, or may be applied to an apparatus (for example, a chip, a chip system, or a circuit) in the session management function network element, or may be applied to an apparatus that can be used in a matching manner with the session management function network element. The following uses an example in which the method is applied to the session management function network element for description. The method may include: receiving a PCC rule from a policy control function network element, where the PCC rule includes the request for subscription to a first event of the terminal device and the first indication information, the PCC rule further includes a notification destination address of an application function network element or a notification destination address of the policy control function network element, and the first indication information indicates to report an event report of the first event in real time and/or indicates to report the event report based on a priority; and sending the event report or a response message indicating that the event report fails to be obtained.

In the solution provided in this application, an SMF on a network side may send the event report of the first event to an AF. Two newly reporting condition types for subscription to the event report of the first event of the terminal device are added to support a requirement for real-time reporting and/or priority-based reporting of an event report in an industrial scenario and another scenario, so as to improve universality of a communication system. Alternatively, the SMF may send the response message indicating that the event report fails to be obtained to the AF. An AF side may receive, from the SMF on the network side, the response message indicating that the event report fails to be obtained, and the AF supports sensing and determining whether a subsequent request for the first event needs to be further created/updated/released, so that air interface resources can be saved.

In a possible implementation, the first event is QoS monitoring.

In a possible implementation, the first indication information indicates to report the event report in real time, and the first indication information includes a time period or a time point for reporting.

In a possible implementation, the first indication information indicates to report the event report based on the priority, and the first indication information includes priority information.

In a possible implementation, sending the event report or the response message indicating that the event report fails to be obtained includes: sending the event report or the response message indicating that the event report fails to be obtained to the application function network element based on the notification destination address of the application function network element in the PCC rule; or sending the event report or the response message indicating that the event report fails to be obtained to the policy control function network element based on the notification destination address of the policy control function network element in the PCC rule.

In a possible implementation, the method further includes: sending a second request message to a user plane network element based on the PCC rule, where the second request message includes the request for subscription to the first event of the terminal device and the first indication information; and receiving, from the user plane network element, the event report or the response message indicating that the event report fails to be obtained.

In a possible implementation, sending the event report or the response message indicating that the event report fails to be obtained to the application function network element includes: sending the event report or the response message indicating that the event report fails to be obtained to the application function network element via a network exposure function network element.

In the solution provided in this application, if the AF is a trusted AF, the SMF on the network side may directly send the event report or the response message indicating that the event report fails to be obtained to the AF. If the AF is an untrusted AF, the SMF on the network side may send the event report or the response message indicating that the event report fails to be obtained to the AF via an NEF.

According to a fourth aspect, this application provides a communication method. The method may be applied to a user plane network element, or may be applied to an apparatus (for example, a chip, a chip system, or a circuit) in a user plane network element, or may be applied to an apparatus that can be used in a matching manner with the user plane network element. The following uses an example in which the method is applied to the user plane network element for description. The method may include: receiving a second request message from a session management function network element, where the second request message includes a request for subscription to a first event of a terminal device and first indication information, and the first indication information indicates to report an event report of the first event in real time and/or indicates to report the event report based on a priority; and sending the event report or a response message indicating that the event report fails to be obtained to the session management function network element.

In the solution provided in this application, the UPF may generate and report the event report based on a condition indicated by the first indication information, or when the UPF cannot generate and report the event report based on the condition indicated by the first indication information, the UPF may send a response message indicating that the event report fails to be obtained to the SMF. In this way, the SMF/PCF on a network side sends the event report of the first event to the AF (or the SMF/PCF on the network side sends the event report of the first event to the AF via the NEF), and two newly reporting condition types for subscription to the event report of the first event of the terminal device are added to support a requirement for real-time reporting and/or priority-based reporting of an event report in an industrial scenario and another scenario, so as to improve universality of a communication system. Alternatively, the SMF/PCF on the network side sends the response message indicating that the event report fails to be obtained to the AF (or the SMF/PCF on the network side sends the response message to the AF via the NEF), and the AF supports sensing and determining whether a subsequent request for the first event needs to be further created/updated/released, so that air interface resources can be saved.

In a possible implementation, the first event is QoS monitoring.

In a possible implementation, the first indication information indicates to report the event report in real time, and the first indication information includes a time period or a time point for reporting.

In a possible implementation, the first indication information indicates to report the event report based on the priority, and the first indication information includes priority information.

In a possible implementation, sending the event report to the session management function network element includes: obtaining delay information between the user plane network element and an access network device; generating the event report based on the delay information; and sending the event report to the session management function network element.

In a possible implementation, sending the response message indicating that the event report fails to be obtained to the session management function network element includes: when the event report cannot be completed under a condition indicated by the first indication information, sending the response message indicating that the event report fails to be obtained to the session management function network element.

In a possible implementation, the method further includes skipping responding to the second request message in a case of session termination, bearer loss, resource allocation failure, or overload.

According to a fifth aspect, an embodiment of this application provides a communication apparatus.

For beneficial effects, refer to the descriptions of the first aspect. Details are not described herein again. The communication apparatus has a function of implementing the behavior in the method instance in the first aspect. The function may be implemented by hardware, or may be implemented by hardware executing corresponding software. The hardware or the software includes one or more modules corresponding to the foregoing function.

In a possible implementation, the communication apparatus includes:
a sending unit, configured to send a first request message to a policy control function network element, where the first request message includes a request for subscription to a first event of a terminal device, first indication information, and a notification destination address of the application function network element, and the first indication information indicates to report an event report of the first event in real time and/or indicates to report the event report based on a priority; and
a receiving unit, configured to receive the event report or a response message indicating that the event report fails to be obtained.

In a possible implementation, the first event is QoS monitoring.

In a possible implementation, the first indication information indicates to report the event report in real time, and the first indication information includes a time period or a time point for reporting.

In a possible implementation, the first indication information indicates to report the event report based on the priority, and the first indication information includes priority information.

In a possible implementation, when receiving the event report or the response message indicating that the event report fails to be obtained, the receiving unit is specifically configured to: receive, from the policy control function network element, the event report or the response message indicating that the event report fails to be obtained; or receive, from a session management function network element, the event report or the response message indicating that the event report fails to be obtained.

In a possible implementation, when receiving, from the policy control function network element, the event report or the response message indicating that the event report fails to be obtained, the receiving unit is specifically configured to receive, from the policy control function network element via a network exposure function network element, the event report or the response message indicating that the event report fails to be obtained.

When receiving, from the session management function network element, the event report or the response message indicating that the event report fails to be obtained, the receiving unit is specifically configured to receive, from the session management function network element via the network exposure function network element, the event report or the response message indicating that the event report fails to be obtained.

In a possible implementation, when sending the first request message to the policy control function network element, the sending unit is specifically configured to send the first request message to the policy control function network element via the network exposure function network element.

According to a sixth aspect, an embodiment of this application provides a communication apparatus.

For beneficial effects, refer to the descriptions of the second aspect. Details are not described herein again. The communication apparatus has a function of implementing the behavior in the method instance in the second aspect. The function may be implemented by hardware, or may be implemented by hardware executing corresponding software. The hardware or the software includes one or more modules corresponding to the foregoing function.

In a possible implementation, the communication apparatus includes:
a receiving unit, configured to receive a first request message from an application function network element, where the first request message includes a request for subscription to a first event of a terminal device, first indication information, and a notification destination address of the application function network element, and the first indication information indicates to report an event report of the first event in real time and/or indicates to report the event report based on a priority; and
a sending unit, configured to send the event report or a response message indicating that the event report fails to be obtained to the application function network element based on the notification destination address of the application function network element in the first request message.

In a possible implementation, the first event is QoS monitoring.

In a possible implementation, the first indication information indicates to report the event report in real time, and the first indication information includes a time period or a time point for reporting.

In a possible implementation, the first indication information indicates to report the event report based on the priority, and the first indication information includes priority information.

In a possible implementation, the communication apparatus further includes:
a processing unit, configured to establish or update a PCC rule based on the first request message, and send the PCC rule to a session management function network element, where the PCC rule includes the request for subscription to the first event of the terminal device and the first indication information, and the PCC rule further includes the notification destination address of the application function network element or a notification destination address of the policy control function network element.

In a possible implementation, when the sending unit sends the event report or the response message indicating that the event report fails to be obtained to the application function network element, specifically, the receiving unit is further configured to receive, from the session management function network element, the event report or the response message indicating that the event report fails to be obtained; and the sending unit sends the event report or the response message indicating that the event report fails to be obtained to the application function network element.

In a possible implementation, when sending the event report or the response message indicating that the event report fails to be obtained to the application function network element, the sending unit is specifically configured to send the event report or the response message indicating that the event report fails to be obtained to the application function network element via a network exposure function network element.

In a possible implementation, when receiving the first request message from the application function network element, the receiving unit is specifically configured to receive the first request message from the application function network element via the network exposure function network element.

According to a seventh aspect, an embodiment of this application provides a communication apparatus.

For beneficial effects, refer to the descriptions of the third aspect. Details are not described herein again. The communication apparatus has a function of implementing the behavior in the method instance in the third aspect. The function may be implemented by hardware, or may be implemented by hardware executing corresponding software. The hardware or the software includes one or more modules corresponding to the foregoing function.

In a possible implementation, the communication apparatus includes:
a receiving unit, configured to receive a PCC rule from a policy control function network element, where the PCC rule includes the request for subscription to a first event of the terminal device and the first indication information, the PCC rule further includes a notification destination address of an application function network element or a notification destination address of the policy control function network element, and the first indication information indicates to report an event report of the first event in real time and/or indicates to report the event report based on a priority; and
a sending unit, configured to send the event report or a response message indicating that the event report fails to be obtained.

In a possible implementation, the first event is QoS monitoring.

In a possible implementation, the first indication information indicates to report the event report in real time, and the first indication information includes a time period or a time point for reporting.

In a possible implementation, the first indication information indicates to report the event report based on the priority, and the first indication information includes priority information.

In a possible implementation, when sending the event report or the response message indicating that the event report fails to be obtained, the sending unit is specifically configured to: send the event report or the response message indicating that the event report fails to be obtained to the application function network element based on the notification destination address of the application function network element in the PCC rule; or send the event report or the response message indicating that the event report fails to be obtained to the policy control function network element based on the notification destination address of the policy control function network element in the PCC rule.

In a possible implementation, the sending unit is further configured to send a second request message to a user plane network element based on the PCC rule, where the second request message includes the request for subscription to the first event of the terminal device and the first indication information.

The receiving unit is further configured to receive, from the user plane network element, the event report or the response message indicating that the event report fails to be obtained.

In a possible implementation, when sending the event report or the response message indicating that the event report fails to be obtained to the application function network element, the sending unit is specifically configured to:
send the event report or the response message indicating that the event report fails to be obtained to the application function network element via a network exposure function network element.

According to an eighth aspect, an embodiment of this application provides a communication apparatus.

For beneficial effects, refer to the descriptions of the fourth aspect. Details are not described herein again. The communication apparatus has a function of implementing behavior in the method instance in the fourth aspect. The function may be implemented by hardware, or may be implemented by hardware executing corresponding software. The hardware or the software includes one or more modules corresponding to the foregoing function.

In a possible implementation, the communication apparatus includes:
a receiving unit, configured to receive a second request message from a session management function network element, where the second request message includes a request for subscription to a first event of a terminal device and first indication information, and the first indication information indicates to report an event report of the first event in real time and/or indicates to report the event report based on a priority; and
a sending unit, configured to send the event report or a response message indicating that the event report fails to be obtained to the session management function network element.

In a possible implementation, the first event is QoS monitoring.

In a possible implementation, the first indication information indicates to report the event report in real time, and the first indication information includes a time period or a time point for reporting.

In a possible implementation, the first indication information indicates to report the event report based on the priority, and the first indication information includes priority information.

In a possible implementation, the communication apparatus further includes a processing unit.

When the sending unit sends the event report to the session management function network element, specifically,
the processing unit is configured to obtain delay information between a user plane network element and an access network device;
the processing unit is further configured to generate the event report based on the delay information; and
the sending unit is configured to send the event report to the session management function network element.

In a possible implementation, when sending the response message indicating that the event report fails to be obtained to the session management function network element, the sending unit is specifically configured to: when the event report cannot be completed under a condition indicated by the first indication information, send the response message indicating that the event report fails to be obtained to the session management function network element.

In a possible implementation, the processing unit is further configured to skip responding to the second request message in a case of session termination, bearer loss, resource allocation failure, or overload.

According to a ninth aspect, an embodiment of this application provides a communication apparatus. The communication apparatus may be an application function network element, or may be an apparatus (for example, a chip, a chip system, or a circuit) in the application function network element. The communication apparatus may include a processor. The processor is coupled to a memory. The memory is configured to store a program or instructions. When the program or the instructions are executed by the processor, the communication apparatus is enabled to perform the method performed by the application function network element or the apparatus in the application function network element in the foregoing method embodiments.

According to a tenth aspect, an embodiment of this application provides a communication apparatus. The communication apparatus may be a policy control function network element, or may be an apparatus (for example, a chip, a chip system, or a circuit) in the policy control function network element. The communication apparatus may include a processor. The processor is coupled to a memory. The memory is configured to store a program or instructions. When the program or the instructions are executed by the processor, the communication apparatus is enabled to perform the method performed by the policy control function network element or the apparatus in the policy control function network element in the foregoing method embodiments.

According to an eleventh aspect, an embodiment of this application provides a communication apparatus. The communication apparatus may be a session management function network element, or may be an apparatus (for example, a chip, a chip system, or a circuit) in the session management function network element. The communication apparatus may include a processor. The processor is coupled to a memory. The memory is configured to store a program or instructions. When the program or the instructions are executed by the processor, the communication apparatus is enabled to perform the method performed by the session management function network element or the apparatus in the session management function network element in the foregoing method embodiments.

According to a twelfth aspect, an embodiment of this application provides a communication apparatus. The communication apparatus may be a user plane network element, or may be an apparatus (for example, a chip, a chip system, or a circuit) in the user plane network element. The communication apparatus may include a processor. The processor is coupled to a memory. The memory is configured to store a program or instructions. When the program or the instructions are executed by the processor, the communication apparatus is enabled to perform the method performed by the user plane network element or the apparatus in the user plane network element in the foregoing method embodiments.

According to a thirteenth aspect, an embodiment of this application provides a computer-readable storage medium. The computer-readable storage medium stores a computer program or computer instructions. When the computer program or the computer instructions run on a computer, the computer is enabled to perform the method according to any one of the first aspect or the possible implementations of the first aspect, any one of the second aspect or the possible implementations of the second aspect, any one of the third aspect or the possible implementations of the third aspect, or any one of the fourth aspect or the possible implementations of the fourth aspect.

According to a fourteenth aspect, an embodiment of this application provides a computer program product including program instructions. When the computer program product runs on a computer, the computer is enabled to perform the method according to any one of the first aspect or the possible implementations of the first aspect, any one of the second aspect or the possible implementations of the second aspect, any one of the third aspect or the possible implementations of the third aspect, or any one of the fourth aspect or the possible implementations of the fourth aspect.

According to a fifteenth aspect, an embodiment of this application provides a chip system. The chip system includes a processor, configured to implement the functions in the foregoing methods. In a possible implementation, the chip system may further include a memory, configured to store program instructions and/or data. The chip system may include a chip, or may include a chip and another discrete component.

According to a sixteenth aspect, an embodiment of this application provides a communication system. The communication system includes an application function network element, a policy control function network element, a session management function network element, and a user plane network element. The application function network element, the policy control function network element, the session management function network element, and the user plane network element, when running in the communication system, are configured to perform any method according to the first aspect to the fourth aspect.

### BRIEF DESCRIPTION OF DRAWINGS

To describe the technical solutions in embodiments of this application more clearly, the following briefly describes the accompanying drawings for describing embodiments.
FIG. 1 is a diagram of a network architecture of a communication system according to an embodiment of this application;
FIG. 2 is a diagram of interaction in a communication method according to an embodiment of this application;
FIG. 3 is a diagram of interaction in another communication method according to an embodiment of this application;
FIG. 4 is a diagram of a structure of a communication apparatus according to an embodiment of this application;
FIG. 5 is a diagram of a structure of another communication apparatus according to an embodiment of this application;
FIG. 6 is a diagram of a structure of still another communication apparatus according to an embodiment of this application;
FIG. 7 is a diagram of a structure of still another communication apparatus according to an embodiment of this application; and
FIG. 8 is a diagram of a structure of still another communication apparatus according to an embodiment of this application.

### DESCRIPTION OF EMBODIMENTS

In descriptions of this application, unless otherwise specified, "/" means "or". For example, A/B may indicate A or B. In this application, the term "and/or" describes only an association relationship between associated objects and indicates that three relationships may exist. For example, A and/or B may indicate the following three cases: Only A exists, both A and B exist, and only B exists. In addition, "at least one" may mean one or more, and "a plurality of" may mean two or more. Terms such as "first" and "second" do not limit a quantity and an execution sequence, and the terms such as "first" and "second" do not indicate a definite difference.

It should be noted that in this application, terms such as "example" or "for example" are used to represent giving an example, an illustration, or a description. Any embodiment or design scheme described as an "example" or "for example" in this application should not be understood as being more preferred or having more advantages than another embodiment or design scheme. Exactly, use of the terms such as "example" or "for example" is intended to present a relative concept in a specific manner.

In the descriptions of this application, "indication" may include a direct indication and an indirect indication, or may include an explicit indication and an implicit indication. Information indicated by a piece of information (for example, indication information described below) is referred to as to-be-indicated information. In a specific implementation process, there are a plurality of manners of indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, and there is an association relationship between the indicated other information and the to-be-indicated information. For another example, only a part of the to-be-indicated information may alternatively be indicated, and another part of the to-be-indicated information is known or pre-agreed on. In addition, specific information may alternatively be indicated by using a pre-agreed (for example, stipulated in a protocol) arrangement sequence of various pieces of information, to reduce indication overheads to some extent.

It should be understood that the technical solutions in embodiments of this application may be applied to various communication systems, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solutions in embodiments of this application may be further applied to another communication system, for example, a public land mobile network (public land mobile network, PLMN) system, a long term evolution advanced (LTE advanced, LTE-A) system, a 5th generation mobile communication system (5th generation, 5G), a new radio (new radio, NR) system, an open access network (open RAN, ORAN) system, a machine to machine (machine to machine, M2M) system, or another future evolved communication system. This is not limited in embodiments of this application. The technical solutions provided in embodiments of this application may be further applied to another communication system, provided that an entity in the communication system can send control information and send (and/or receive) a transport block, and another entity in the communication system can receive the control information and receive (and/or send) the transport block.

The technical solutions in embodiments of this application may be further applied to an industrial scenario. Some industrial devices need to perform on-demand monitoring on the devices in a specific case, for example, report QoS monitoring information at a specific time point or in a specific time period. The technical solutions may be applied to a scenario in which QoS monitoring information is reported at high frequency in a fixed time period during night shift, to facilitate timely monitoring and avoid an accident. The technical solutions in embodiments of this application may alternatively be applied to a medical scenario. When a plurality of medical machines run in parallel, in the case of an emergency, the QoS monitoring information may be requested to be reported based on a priority, to facilitate timely processing of a medical emergency.

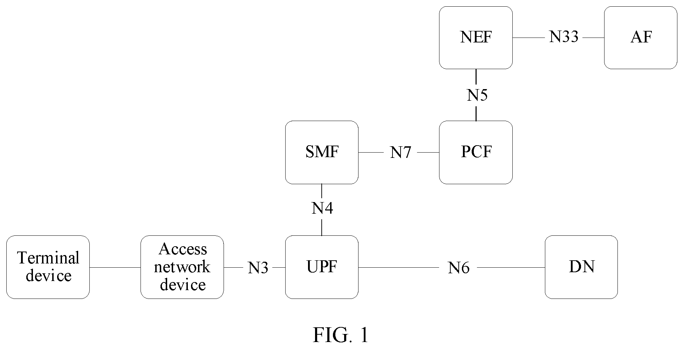

FIG. 1 is a diagram of a network architecture of a communication system according to an embodiment of this application. As shown in FIG. 1, the network architecture may include the following devices, network elements, and networks.
1. A terminal device may include various handheld devices, vehicle-mounted devices, wearable devices, or computing devices that have a wireless communication function, or other processing devices connected to a wireless modem, and terminals in various forms, for example, a mobile station (mobile station, MS), a terminal (terminal), user equipment (user equipment, UE), and a soft terminal. For example, the terminal may be a water meter, an electricity meter, or a sensor.
2. A (radio) access network (radio access network, RAN) network element is configured to provide a network access function for authorized terminals in a specific area, and can use transmission tunnels with different quality based on levels of the terminals, service requirements, and the like. The RAN network element can manage a radio resource and provide an access service for the terminal, to forward a control signal and terminal data between the terminal and a core network. The network element may also be understood as a base station in a conventional network.
3. A user plane network element is configured for packet routing and forwarding, quality of service (quality of service, QoS) handling for user plane data, and the like. In a 5G communication system, the user plane network element may be a user plane function (user plane function, UPF) network element. In a future communication system, the user plane network element may still be a UPF network element, or may have another name. This is not limited in this application.
4. A session management network element is mainly configured for session management, terminal device internet protocol (internet protocol, IP) address allocation and management, selection and management of an endpoint of a user plane function interface and a policy control and charging function interface, downlink data notification, and the like. In the 5G communication system, the session management network element may be a session management function (session management function, SMF) network element. In the future communication system, the session management network element may still be an SMF network element, or may have another name. This is not limited in this application.
5. A policy control network element is a unified policy framework for guiding a network behavior, and provides policy rule information and the like for a control plane function network element (for example, an AMF network element or an SMF network element). In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be a PCF network element, or may have another name. This is not limited in this application.
6. A network repository network element is configured to maintain real-time information of all network functional entities and services in a network. In the 5G communication system, the network repository network element may be a network repository function (network repository function, NRF) network element, or may be a network exposure (network exposure function, NEF) network element. In the future communication system, the network repository network element may still be an NRF network element, or may have another name. This is not limited in this application.
7. An application network element mainly transfers a requirement of an application side (for example, a terminal device side) for a network side. The requirement herein may be, for example, a QoS requirement, a requirement for a user status event subscription, or a planning requirement for a 5G LAN group. The application network element may be a third-party functional entity, or may be an application service deployed by an operator, for example, an internet protocol (internet protocol, IP) multimedia subsystem (IP multimedia subsystem, IMS) voice call service. When interacting with the core network, an application functional entity of a third-party application may further perform authorization processing via the NEF. For example, a third-party application function directly sends a request to the NEF, and the NEF determines whether the AF is allowed to send the request. If verification succeeds, the request is forwarded to a corresponding PCF or UDM. In the 5G communication system, the application network element may be an application function (application function, AF) network element. In the future communication system, the application network element may still be an AF network element, or may have another name. This is not limited in this application.

It may be understood that, in this embodiment of this application, the AF and other network elements (such as the PCF, the SMF, and the UPF) of the core network may be deployed by a same operator, or may be deployed by different operators.

Each of the foregoing network elements in the core network may also be referred to as a functional entity, and may be a network element implemented on dedicated hardware, or may be a software instance running on dedicated hardware, or an instance of a virtualization function on an appropriate platform. For example, the virtualization platform may be a cloud platform.

It should be noted that the network architecture shown in FIG. 1 is not limited to only the network elements shown in the figure, and may further include other devices that are not shown in the figure. Examples are not specifically listed one by one in this application. A distribution form of the network elements in the core network is not limited in embodiments of this application. The distribution form shown in FIG. 1 is merely an example, and is not limited in this application.

It should be understood that names of all network elements in this application are merely used as examples. In future communication, for example, 6G, names of the network elements may also be referred to as other names. Alternatively, in future communication, for example, 6G, the network elements in this application may be replaced with other entities, devices, or the like that have a same function. This is not limited in this application. Unified descriptions are provided herein, and details are not described below again.

It should be noted that the network architecture shown in FIG. 1 does not constitute a limitation on a 5G network. Optionally, a method in embodiments of this application is further applied to various future communication systems, for example, 6G or another communication network. In addition, although not shown in FIG. 1, the communication system may further include another network element, device, network entity, or network subsystem, for example, a binding support function (binding support function, BSF) network element. Details are not described again in embodiments of this application.

Optionally, various network elements in embodiments of this application may be communication devices, or may be chips, chip systems, or the like that may be used in the communication devices. The foregoing network elements may be different communication devices, or may be different communication apparatuses, modules, or subsystems in a same communication device. This is not limited in embodiments of this application.

Optionally, the terminal device (terminal) in embodiments of this application may be a device configured to implement a wireless communication function, for example, a terminal device or a chip that may be used in the terminal device. The terminal device may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal may be movable or fixed.

A network device in embodiments of this application is an entity configured to transmit or receive a signal, and may be a device configured to communicate with the terminal. The network device may be an access network device. The access network device includes but is not limited to a base station (base station), an evolved NodeB (evolved NodeB, eNodeB), or a transmission reception point (transmission reception point, TRP) in the foregoing communication system, a next generation NodeB (next generation NodeB, gNB) in a 5G mobile communication system, and a next generation base station in a 6th generation (6th generation, 6G) mobile communication system, an access network device or a module of the access network device in an open access network ORAN (open RAN, ORAN) system, a base station in a future mobile communication system, an access node in a Wi-Fi system, or the like. Alternatively, the network device may be a chip, a module, or a unit that can implement some functions of the base station. In a network structure, the network device may include a central unit (central unit, CU) node, or a distributed unit (distributed unit, DU) node, or a RAN device including a CU node and a DU node. In the ORAN system, the CU may also be referred to as an O-CU, and the DU may also be referred to as an O-DU.

The access network device may be a macro base station, a micro base station, or an indoor base station, a relay node or a donor node, or a radio controller in a cloud radio access network (cloud radio access network, CRAN) scenario. Optionally, the access network device may alternatively be a server, a wearable device, a vehicle-mounted device, or the like. For example, an access network device in a vehicle to everything (vehicle to everything, V2X) technology may be a road side unit (road side unit, RSU). A plurality of access network devices in the communication system may be base stations of a same type, or may be base stations of different types. The base station may communicate with a terminal, or may communicate with the terminal through a relay station. The terminal may communicate with a plurality of base stations in different access technologies.

The access network device and/or the terminal may be fixed, or may be movable. The access network device and/or the terminal may be deployed terrestrially, including an indoor device or an outdoor device, a handheld device, or a vehicle-mounted device; or may be deployed on the water; or may be deployed on an airplane, a balloon, and an artificial satellite in the air. Application scenarios of the access network device and the terminal are not limited in the present disclosure. The access network device and the terminal device may be deployed in a same scenario or different scenarios. For example, the access network device and the terminal device are both deployed on the land; or the access network device is deployed on the land, and the terminal device is deployed on the water. Examples are not provided one by one.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution entity of the method provided in embodiments of this application is not particularly limited in embodiments of this application, provided that a program that records code of the method provided in embodiments of this application can be run to perform communication according to the method provided in embodiments of this application. For example, the execution entity of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable medium" may include but is not limited to a radio channel, and various other media that can store, include, and/or carry instructions and/or data.

Further, the PCF network element may be referred to as a PCF for short, the SMF network element may be referred to as an SMF for short, the UPF network element may be referred to as a UPF for short, the AF network element may be referred to as an AF for short, and so on. To be specific, the PCF described subsequently in this application may be replaced with a policy control function network element, the SMF may be replaced with a session management network element, and other network elements are similar to this.

First, for ease of understanding of embodiments of this application, technical problems specifically to be resolved in this application are further proposed and analyzed.

A 5th generation (5th generation, 5G) local area network (local area network, 5G LAN) service or a 5G virtual network (virtual network, 5GVN) service is a service provided by a current 5G network, and is mainly applied to home communication, enterprise office, factory manufacturing, an internet of vehicles, power grid reconstruction, public security organs, and the like. Currently, an exposure capability of a capability exposure network element (network exposure function, NEF) may be enhanced to meet a potential requirement and provide a traffic characteristic and a monitoring performance characteristic that are applicable to each terminal device in a given group or a specific scenario. An NEF framework allows an external application to subscribe to a feature event notification of the terminal device in the group. For example, an AF may subscribe to a QoS monitoring request of the terminal device, to request a PCF/an SMF/a UPF on a network side to report QoS monitoring information. A policy of the QoS monitoring request may include a reporting condition of the QoS monitoring information, including four manners: event triggered, periodic reporting, reporting when a measurement result exceeds a threshold, and reporting when a PDU session is released.

However, for example, in an industrial scenario, the QoS monitoring information needs to be reported based on a specific requirement, to meet monitoring requirements of a device and a network management system for connectivity in a scenario such as industrial control. Using only four reporting conditions in an existing mechanism cannot support requirements in more specific application scenarios. In addition, when the PCF/SMF on the network side cannot report the QoS monitoring information, the AF keeps waiting to obtain the QoS monitoring information, and may finally fail to obtain the QoS monitoring information, resulting in a waste of air interface resources.

Therefore, the technical problems that need to be resolved in this application may include the following.
(1) This application provides two newly added reporting condition types for subscription to an event report of a first event of a terminal device. In addition to four original reporting condition types, real-time reporting of the event report and reporting of the event report of the first event based on a priority are further supported. To be specific, a reporting condition type delivered by an AF is enhanced, to support a requirement for real-time reporting and/or priority-based reporting of the event report in an industrial scenario and another scenario, so as to improve universality of a communication system.
(2) The SMF/PCF on the network side is enhanced. When the SMF/PCF still cannot receive an event report of the UPF within a range required by a reporting condition, or receives, from the UPF, a response message indicating that the event report fails to be obtained, the SMF/PCF may send the response message indicating that the event report fails to be obtained to the AF (via the NEF), and the AF supports sensing and determining whether a subsequent request for the first event needs to be further created/updated/released, so that air interface resources can be saved.

This application provides a communication method. The following separately describes the communication method by using the following embodiments. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

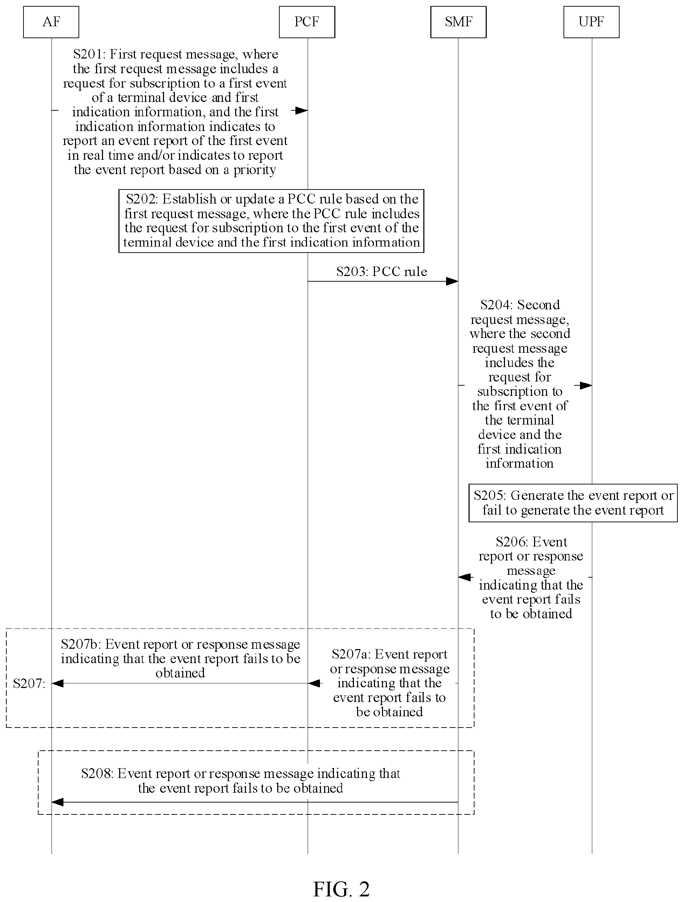

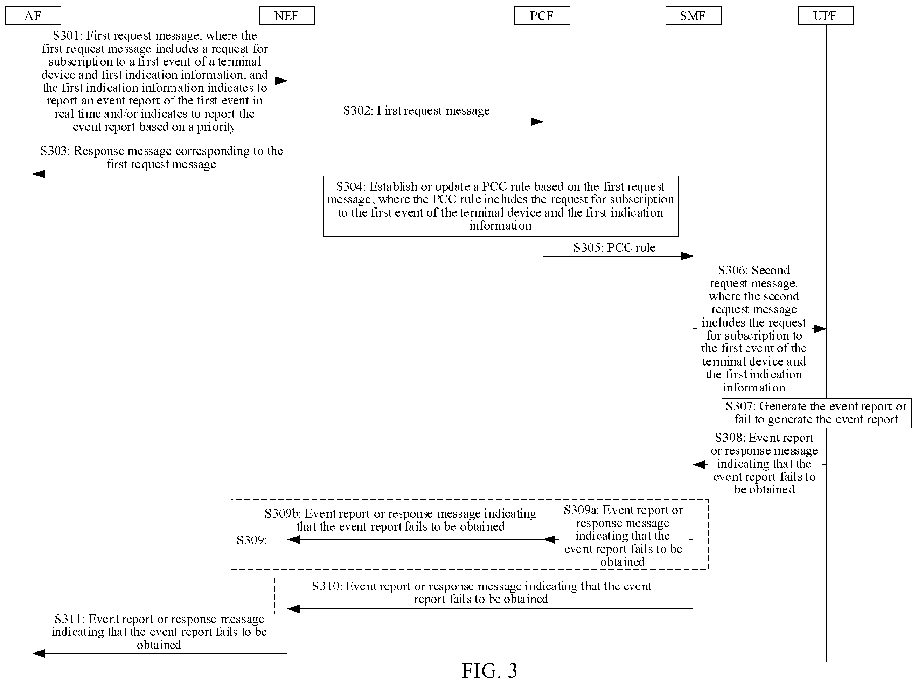

In embodiments of this application (for example, the following embodiments corresponding to FIG. 2 and FIG. 3), an example in which a network element of a core network is used as an execution entity of an interaction example may be used to illustrate the method. The network element of the core network may include a session management network element (for example, an SMF network element), a user plane network element (for example, a UPF network element), a policy control function network element (for example, a PCF network element), and an application function network element (for example, an AF network element). The following uses the SMF network element, the UPF network element, the PCF network element, the AF network element, and the like as examples for description, and names of these network elements are not limited substantially. In addition, an execution entity of the interaction example is not limited in this application. For example, a core network network element may be a chip, a chip system, or a processor that supports the core network network element in implementing the method, or may be a logical module or software that can implement all or some functions of the core network network element. In embodiments of this application, uniform descriptions are provided herein, and details are not described below again.

The following describes a communication method provided in an embodiment of this application. FIG. 2 is a diagram of interaction in a communication method according to an embodiment of this application. In an interaction procedure of the communication method shown in FIG. 2, an AF may be a trusted AF (trusted AF). To be specific, the trusted AF may directly communicate with a PCF on a network side without using an NEF. As shown in FIG. 2, the communication method may include at least the following steps.

S201: The AF sends a first request message to the PCF, where the first request message includes a request for subscription to a first event of a terminal device and first indication information, and the first indication information indicates to report an event report of the first event in real time (real-time reporting) and/or indicates to report the event report based on a priority (priority reporting). Correspondingly, the PCF receives the first request message from the AF.

Specifically, the AF may send a request by using a resource of "AS Session with Required QoS Subscriptions", invoke a service operation of Npcf_PolicyAuthorization_Create, and send the first request message to the PCF.

The request for subscription to the first event of the terminal device may be a QoS monitoring request of the terminal device that is subscribed to. The event report of the first event may be QoS monitoring information. For example, in an application scenario of ultra-reliable low-latency communication (ultra-reliable low-latency communication, URLLC), the QoS monitoring information may be measurement result of a real-time data packet delay between the terminal device and a UPF in a corresponding QoS flow (QoS flow). It may be understood that this embodiment is described by using an example in which the first event is QoS monitoring. The first event may alternatively be another event of the terminal device. A type of the first event is not limited in this embodiment.

The first request message may further include information about an event reporting destination, for example, a notification destination address (notification destination address/Uri) of the AF. The address may be used for subscription and notification of the first event. Optionally, the information about the event reporting destination may be, for example, indicated by the PCF or the AF as a notification destination address and a notification correlation ID. Event parameters such as an uplink and downlink packet delay and a round-trip packet delay need to be measured. For an indication of a direct notification event, for example, the UPF is requested to report an event report directly to the NEF or the AF. The reporting condition type may include:
event-triggered reporting, where an event trigger may be set, and when a condition meets an event requirement, the UPF/an SMF/the PCF on a network side reports the QoS monitoring information to the AF via the NEF;
periodic reporting, where the AF includes a time requirement for reporting information when sending a request for subscription to the first event, and the UPF/SMF/PCF on the network side may report the event report to the AF within a fixed time interval;
reporting, by the UPF/SMF/PCF on the network side, a delay measurement result (that is, the event report, for example, the QoS monitoring information) to the AF when a packet delay measurement result meets a threshold requirement; and
reporting, by the UPF/SMF/PCF on the network side, a stored event report to the AF when a packet data unit (packet data unit, PDU) session is released.

In this embodiment, two new reporting condition types, namely, real-time reporting and event reporting based on a priority, may be added. The first indication information may indicate one or both of the two newly added reporting condition types, that is, the first indication information may indicate to report the event report in real time and/or indicate to report the event report based on the priority.

When the first indication information indicates to report the event report in real time, the first indication information may further include a time period or a time point for reporting. For example, the event report is reported in a time period (for example, within 100 milliseconds (ms)), or the event report is reported at a time point (for example, year-month-day-hour-minute-second) in universal coordinated time (universal coordinated time, UTC). It may be understood that the real-time reporting condition is different from the foregoing periodic reporting in that the real-time reporting may be performed to report an event report only once or a plurality of times within a specific period of time, and reporting frequency does not need to remain unchanged.

When the first indication information indicates to report the event report based on the priority, the first indication information may further include priority information. The priority information may be in a string, integer, or high/low form, or the like, and the form of the priority information is not limited in this embodiment.

When the first indication information indicates to report the event report in real time and report the event report based on the priority, the first indication information may further include a time period or a time point for reporting, and priority information.

It may be understood that the reporting condition type carried in the first request message may be one or more of the six reporting condition types. For example, the reporting condition type included in the first request message is real-time reporting, or the reporting condition type included in the first request message is priority-based reporting, or the reporting condition type included in the first request message is real-time reporting and priority-based reporting, or the reporting condition type included in the first request message is event-triggered reporting, periodic reporting, and reporting when a packet delay measurement result meets a threshold requirement, or the reporting condition type included in the first request message is real-time reporting, priority-based reporting, and periodic reporting, or the reporting condition type included in the first request message is real-time reporting, priority-based reporting, periodic reporting, event-triggered reporting, reporting when a packet delay measurement result meets a threshold requirement, reporting when a PDU session is released, and the like. Examples are not described one by one.

For the request for subscription to the first event, in an existing mechanism, types of a condition for triggering reporting are limited, and only four condition manners are indicated: event triggered, periodic reporting, reporting when a measurement result exceeds a threshold, and reporting when a PDU session is released. For a specific requirement in an industrial application scenario or another application scenario, simply using the four existing trigger conditions cannot meet a request for reporting, based on a specific requirement, the first event subscribed by the AF, for example, reporting an event report in real time or reporting an event report based on a priority. Therefore, a new reporting condition type is added to support more application scenarios, for example, to support a requirement for real-time reporting and/or priority-based reporting of the event report in an industrial scenario and another scenario, so as to improve universality of a communication system.

It may be understood that if the AF supports an "ExposureToEAS" function, the AF may request reporting of the event report from the UPF. To be specific, in step S205, after the UPF generates the event report or fails to generate the event report, the event report or a response message indicating that the event report fails to be obtained may be sent to the AF without being forwarded by the SMF/PCF (for example, steps S206 and S207/S208).

S202: The PCF establishes or updates a PCC rule based on the first request message, where the PCC rule includes the request for subscription to the first event of the terminal device and the first indication information.

After receiving the first request message from the AF, the PCF may establish or update the PCC rule based on the first request message. The PCC rule may include the request for subscription to the first event of the terminal device and the first indication information. To be specific, the PCF may establish or update, to a corresponding PCC rule, information indicating that the AF requests to subscribe to the first event and a reporting condition of the event report of the first event.

The PCF may generate or change a trigger, so that the trigger is configured to implement the reporting condition of the first event report. For example, the trigger condition of the trigger is a real-time condition and/or reporting the event report of the first event based on the priority. It may be understood that the trigger may be an entity/a carrier that implements a reporting condition of the event report of the first event.

Specifically, if the PCF has not generated a trigger before, a new trigger may be generated, so that a trigger condition of the new trigger meets real-time reporting and/or reporting the event report of the first event based on the priority. If the PCF has previously generated a trigger, a parameter of the original trigger may be modified, so that a trigger condition of the trigger whose parameter is modified meets real-time reporting and/or reporting the event report of the first event based on the priority.

The PCC rule may further include a notification destination address, for example, the notification destination address of the AF or a notification destination address of the PCF. If the PCF determines that a notification of the first event (the event report or the response message indicating that the event report fails to be obtained) needs to be sent to the AF via the PCF, the PCC rule may carry the notification destination address of the PCF. If the PCF determines that the notification of the first event (the event report or the response message indicating that the event report fails to be obtained) needs to be sent to the AF via the SMF, the PCC rule may carry the notification destination address of the AF.

Further, the PCC rule may further include the foregoing trigger. To be specific, the PCF may provide a trigger for the SMF, to trigger real-time reporting and/or reporting the event report of the first event based on the priority.

Optionally, after receiving the first request message from the AF, the PCF may send, to the AF, a response message corresponding to the first request message that is accepted from the AF.

S203: The PCF sends the PCC rule to the SMF. Correspondingly, the SMF receives the PCC rule from the PCF.

Specifically, the PCF may invoke a subscription service operation and a notification service operation of Npcf_SMPolicyControl and send the PCC rule to the SMF.

S204: The SMF sends a second request message to the UPF, where the second request message includes the request for subscription to the first event of the terminal device and the first indication information. Correspondingly, the UPF receives the second request message from the SMF.

After receiving the PCC rule from the PCF, the SMF may invoke a service operation of N4 Session Establishment/Modification and send the second request message to the UPF. The second request message may include the request for subscription to the first event of the terminal device and the first indication information.

S205: The UPF generates the event report or fails to generate the event report.

After the UPF receives the second request message from the SMF, in a first possible implementation, the UPF may obtain information such as a delay between the UPF and an access network device (for example, an NG-RAN), and generate the event report of the first event based on delay information. In this case, the UPF may send the event report to the SMF. In a second possible implementation, if the UPF cannot complete the event report under a condition indicated by the first indication information, the UPF fails to generate the event report, and the UPF may send the response message indicating that the event report fails to be obtained to the SMF. In a third possible implementation, the UPF may discard the event report and skip responding to the second request message in a case of session termination, bearer loss, resource allocation failure, or overload.

S206: The UPF sends the event report or the response message indicating that the event report fails to be obtained to the SMF. Correspondingly, the SMF receives, from the UPF, the event report or the response message indicating that the event report fails to be obtained.

In correspondence to the first possible implementation of step S205, the SMF may receive the event report from the UPF. In correspondence to the second possible implementation of step S205, the SMF may receive, from the UPF, the response message indicating that the event report fails to be obtained. In correspondence to the third possible implementation of step S205, if the SMF does not receive the event report from the UPF under a reporting condition for the request, the SMF may send the response message indicating that the event report fails to be obtained to the PCF/AF.

The SMF may determine, based on the notification destination address (for example, the notification destination address of the AF or the notification destination address of the PCF) in the PCC rule delivered by the PCF, whether the SMF or the PCF sends the event report or the response message indicating that the event report fails to be obtained to the AF.

S207a: The SMF sends the event report or the response message indicating that the event report fails to be obtained to the PCF. Correspondingly, the PCF receives, from the SMF, the event report or the response message indicating that the event report fails to be obtained.

The SMF may send, based on the notification destination address of the PCF in the PCC rule delivered by the PCF, the event report or the response message indicating that the event report fails to be obtained to the PCF.

Specifically, after receiving, from the UPF, the event report or the response message indicating that the event report fails to be obtained, the SMF may invoke the service operation of Npcf_SMPolicyControl and send, based on the notification destination address of the PCF provided by the PCC rule, the event report or the response message indicating that the event report fails to be obtained to the PCF.

S207b: The PCF sends the event report or the response message indicating that the event report fails to be obtained to the AF. Correspondingly, the AF receives, from the PCF, the event report or the response message indicating that the event report fails to be obtained.

After receiving, from the SMF, the event report or the response message indicating that the event report fails to be obtained, the PCF may invoke a subscription service operation and a notification service operation of Npcf_PolicyAuthorization and send the event report or the response message indicating that the event report fails to be obtained to the AF.

In a possible implementation, the PCF may send, based on the notification destination address of the AF in the first request message, the event report or the response message indicating that the event report fails to be obtained to the AF.

S208: The SMF sends the event report or the response message indicating that the event report fails to be obtained to the AF. Correspondingly, the AF receives, from the SMF, the event report or the response message indicating that the event report fails to be obtained.

The SMF may send, based on the notification destination address of the AF in the PCC rule delivered by the PCF, the event report or the response message indicating that the event report fails to be obtained to the AF. Specifically, the SMF may invoke a subscription service operation and a notification service operation of Nsmf_EventExposure and send, based on the notification destination address of the AF provided by the PCC rule, the event report or the response message indicating that the event report fails to be obtained to the AF.

It may be understood that either step S207 (including S207a and S207b) or step S208 may exist, that is, step S207 and step S208 are two different parallel implementations, and only one of step S207 and step S208 is required.

It should be understood that sequence numbers of the foregoing processes do not mean execution sequences in this embodiment. The execution sequences of the processes should be determined based on functions and internal logic of the processes, and should not be construed as any limitation on implementation processes of embodiments of this application.

In the solution provided in this embodiment, a reporting condition type of subscription of the AF to a request for the first event and a related procedure of feeding back the event report of the first event on the network side are specifically involved, so that the event report is reported based on a specific requirement, and a related mechanism is executed by improving the procedure. The trusted AF may trigger a request message for the first event to the PCF on the network side, where the request message carries a newly added reporting condition indication, that is, indicates real-time reporting and/or reporting the event report of the first event based on the priority. The PCF delivers/updates the PCC rule to the SMF, where the PCC rule carries the request for subscription to the first event and the newly added reporting condition indication. The SMF may notify the UPF, wait for the UPF to calculate and obtain the event report of the first event, and then send the event report to the AF via the SMF/PCF. When the UPF cannot send the event report to the AF via the SMF/PCF under a reporting condition due to a session termination, a bearer loss, a resource allocation failure, overload, or the like, the UPF may discard the event report. If the SMF does not receive the event report from the UPF, the SMF may indicate that the subscribed first event fails to be obtained, and send the response message indicating that the event report fails to be obtained to the AF via the SMF/PCF. Alternatively, when the UPF cannot meet the reporting condition to generate the event report, the UPF may send the response message indicating that the event report fails to be obtained to the SMF, and send the response message indicating that the event report fails to be obtained to the AF via the SMF/PCF. In this embodiment, the new reporting condition type is added to support more application scenarios, for example, to support the requirement for real-time reporting and/or priority-based reporting of the event report in the industrial scenario and another scenario, so as to improve the universality of the communication system. In addition, when the SMF/PCF still cannot receive the event report of the UPF within a range required by the reporting condition, or receives, from the UPF, the response message indicating that the event report fails to be obtained, the SMF/PCF may send the response message indicating that the event report fails to be obtained to the AF, and the AF supports sensing and determining whether a subsequent request for the first event needs to be further created/updated/released, so that air interface resources can be saved.

The following describes another communication method provided in an embodiment of this application. FIG. 3 is a diagram of interaction in another communication method according to an embodiment of this application. It should be understood that explanations of terms in different embodiments of this application may refer to each other. To avoid redundant descriptions, a same term may not be described again in different embodiments. In the interaction procedure of the communication method shown in FIG. 2, an AF may be an untrusted AF (untrusted AF). To be specific, the untrusted AF needs to communicate with a PCF on a network side via an NEF. As shown in FIG. 3, the communication method may include at least the following steps. Step S303 is an optional step.

S301: The AF sends a first request message to the NEF, where the first request message includes a request for subscription to a first event of a terminal device and first indication information, and the first indication information indicates to report an event report of the first event in real time and/or indicates to report the event report based on a priority. Correspondingly, the NEF receives the first request message from the AF.

For specific descriptions of the first request message, refer to the detailed descriptions in step S201. Details are not described herein again.

After receiving the first request message from the AF, the NEF may perform authentication on the first request message.

Optionally, if there is no PCF address on the NEF based on a local configuration, the NEF may invoke a service operation of Nbsf_Management_Discovery and obtain an identifier of the PCF selected for an ongoing PDU session identified by a single terminal device address in the first request message.

It may be understood that if the AF supports an "ExposureToEAS" function, the AF may request reporting of the event report from a UPF. To be specific, in step S307, after the UPF generates the event report or fails to generate the event report, the event report or a response message indicating that the event report fails to be obtained may be sent to the AF without being forwarded by an SMF/the PCF (for example, steps S308 and S309/S310).

S302: The NEF sends the first request message to the PCF. Correspondingly, the PCF receives the first request message from the NEF.

After receiving the first request message from the AF, the NEF may forward the first request message to the PCF. For example, the NEF may invoke a service operation of Npcf_PolicyAuthorization_Create/Update and forward the first request message from the AF to the PCF. To be specific, the NEF forwards, to the PCF, information, from the AF, such as subscription to the first event of the terminal device and a reporting condition of the event report of the first event.

S303: The NEF sends, to the AF, a response message corresponding to the first request message. Correspondingly, the AF receives the response message corresponding to the first request message from the NEF.

Specifically, the AF sends the first request message to the NEF, and a request message of an Nnef_AFSessionWithQoS_Create/Update/Delete request may be triggered. The NEF first replies, by using an Nnef_AFsessionWithQoS_Create/Update/Delete response, to the AF with the response message corresponding to the first request message, to indicate whether to receive a request for the first event subscribed by the AF, where no event report of the first event or no response message indicating that the event report fails to be obtained is carried. Then, the NEF may wait for the PCF/SMF on the network side to feed back the event report or the response message indicating that the event report fails to be obtained, and forward the event report or the response message indicating that the event report fails to be obtained to the AF by using the Nnef_AFsessionWithQoS_Notify request.

It may be understood that the NEF may choose not to preferentially reply to the AF with the response message corresponding to the first request message, that is, not to preferentially reply to the AF with information indicating whether the first request message is accepted, but wait for the PCF/SMF on the network side to report the event report or the response message indicating that the event report fails to be obtained, and then include the event report or the response message indicating that the event report fails to be obtained in the response message corresponding to the first request message to reply the AF, so that signaling overheads can be reduced.

S304: The PCF establishes or updates a PCC rule based on the first request message, where the PCC rule includes the request for subscription to the first event of the terminal device and the first indication information.

It may be understood that for specific descriptions of step S304, refer to step S202. To avoid repetition, details are not described herein again.

S305: The PCF sends the PCC rule to the SMF. Correspondingly, the SMF receives the PCC rule from the PCF.

It may be understood that for specific descriptions of step S305, refer to step S203. To avoid repetition, details are not described herein again.

S306: The SMF sends a second request message to the UPF, where the second request message includes the request for subscription to the first event of the terminal device and the first indication information. Correspondingly, the UPF receives the second request message from the SMF.

It may be understood that for specific descriptions of step S306, refer to step S204. To avoid repetition, details are not described herein again.

S307: The UPF generates the event report or fails to generate the event report.

It may be understood that for specific descriptions of step S307, refer to step S205. To avoid repetition, details are not described herein again.

S308: The UPF sends the event report or the response message indicating that the event report fails to be obtained to the SMF. Correspondingly, the SMF receives, from the UPF, the event report or the response message indicating that the event report fails to be obtained.

It may be understood that for specific descriptions of step S308, refer to step S206. To avoid repetition, details are not described herein again.

S309a: The SMF sends the event report or the response message indicating that the event report fails to be obtained to the PCF. Correspondingly, the PCF receives, from the SMF, the event report or the response message indicating that the event report fails to be obtained.

It may be understood that for specific descriptions of step S309a, refer to step S207a. To avoid repetition, details are not described herein again.

S309b: The PCF sends the event report or the response message indicating that the event report fails to be obtained to the NEF. Correspondingly, the NEF receives, from the PCF, the event report or the response message indicating that the event report fails to be obtained.

After receiving, from the SMF, the event report or the response message indicating that the event report fails to be obtained, the PCF may invoke a subscription service operation and a notification service operation of Npcf_PolicyAuthorization and send the event report or the response message indicating that the event report fails to be obtained to the NEF.

S310: The SMF sends the event report or the response message indicating that the event report fails to be obtained to the NEF. Correspondingly, the NEF receives, from the SMF, the event report or the response message indicating that the event report fails to be obtained.

The SMF may send, based on a notification destination address of the AF in the PCC rule delivered by the PCF, the event report or the response message indicating that the event report fails to be obtained to the NEF. Specifically, the SMF may invoke a subscription service operation and a notification service operation of Nsmf_EventExposure and send, based on the notification destination address of the AF provided by the PCC rule, the event report or the response message indicating that the event report fails to be obtained to the NEF.

S311: The NEF sends the event report or the response message indicating that the event report fails to be obtained to the AF. Correspondingly, the AF receives, from the NEF, the event report or the response message indicating that the event report fails to be obtained.

It may be understood that either step S309 (including S309a and S309b) or step S310 may exist, that is, step S309 and step S310 are two different parallel implementations, and only one of step S309 and step S310 is required.

In S309 and S311, it may be understood that after the SMF sends the event report or the response message indicating that the event report fails to be obtained to the PCF, the PCF sends the event report or the response message indicating that the event report fails to be obtained to the AF via the NEF. In S310 and S311, it may be understood that the SMF sends, the event report or the response message indicating that the event report fails to be obtained to the AF via the NEF.

It should be understood that sequence numbers of the foregoing processes do not mean execution sequences in this embodiment. The execution sequences of the processes should be determined based on functions and internal logic of the processes, and should not be construed as any limitation on implementation processes of embodiments of this application.

In the solution provided in this embodiment, a reporting condition type of subscription of the AF to a request for the first event and a related procedure of feeding back the event report of the first event on the network side are specifically involved, so that the event report is reported based on a specific requirement, and a related mechanism is executed by improving the procedure. The untrusted AF may trigger a request message for the first event to the PCF on the network side via the NEF, where the first event request message carries a newly added reporting condition indication, that is, indicates real-time reporting and/or reporting the event report of the first event based on the priority. The PCF delivers/updates the PCC rule to the SMF, where the PCC rule carries the request for subscription to the first event and the newly added reporting condition indication. The SMF may notify the UPF, wait for the UPF to calculate and obtain the event report of the first event, and then send the event report to the AF via the SMF/PCF. When the UPF cannot send the event report to the AF via the SMF/PCF under a reporting condition due to a session termination, a bearer loss, a resource allocation failure, overload, or the like, the UPF may discard the event report. If the SMF does not receive the event report from the UPF, the SMF may indicate that the subscribed first event fails to be obtained, and send the response message indicating that the event report fails to be obtained to the AF via the SMF/PCF. Alternatively, when the UPF cannot meet the reporting condition to generate the event report, the UPF may send the response message indicating that the event report fails to be obtained to the SMF, and the SMF/PCF may send the response message indicating that the event report fails to be obtained to the AF via the NEF. In this embodiment, the new reporting condition type is added to support more application scenarios, for example, to support the requirement for real-time reporting and/or priority-based reporting of the event report in an industrial scenario and another scenario, so as to improve universality of a communication system. In addition, when the SMF/PCF still cannot receive the event report of the UPF within a range required by the reporting condition, or receives, from the UPF, the response message indicating that the event report fails to be obtained, the SMF/PCF may send the response message indicating that the event report fails to be obtained to the AF, and the AF supports sensing and determining whether a subsequent request for the first event needs to be further created/updated/released, so that air interface resources can be saved. In addition, step S303 may not be performed. To be specific, the NEF may choose not to preferentially reply to the AF with the response message corresponding to the first request message, that is, not to preferentially reply to the AF with information indicating whether the first request message is accepted, but wait for the PCF/SMF on the network side to report the event report or the response message indicating that the event report fails to be obtained, and then include the event report or the response message indicating that the event report fails to be obtained in the response message corresponding to the first request message to reply the AF, so that signaling overheads can be reduced.

The foregoing content describes the methods provided in this application. To better implement the foregoing solutions in embodiments of this application, embodiments of this application further provide corresponding apparatuses.

In embodiments of this application, the communication apparatus may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used.

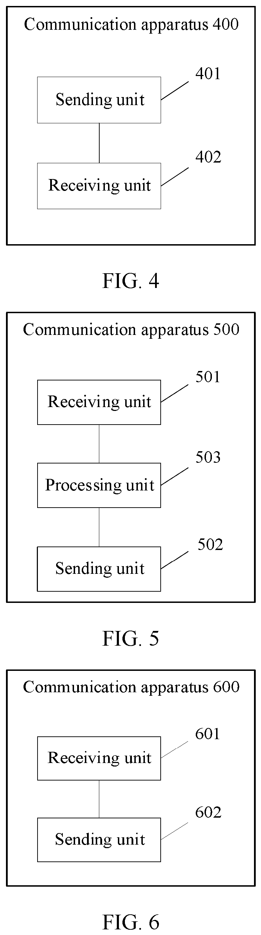

FIG. 4 is a diagram of a structure of a communication apparatus according to an embodiment of this application. The communication apparatus may be an application function network element, or may be an apparatus (for example, a chip, a chip system, or a circuit) in the application function network element. As shown in FIG. 4, the communication apparatus 400 includes at least a sending unit 401 and a receiving unit 402.

The sending unit 401 is configured to send a first request message to a policy control function network element, where the first request message includes a request for subscription to a first event of a terminal device, first indication information, and a notification destination address of the application function network element, and the first indication information indicates to report an event report of the first event in real time and/or indicates to report the event report based on a priority.

The receiving unit 402 is configured to receive the event report or a response message indicating that the event report fails to be obtained.

In an implementation, the first event is QoS monitoring.

In an implementation, the first indication information indicates to report the event report in real time, and the first indication information includes a time period or a time point for reporting.

In an implementation, the first indication information indicates to report the event report based on the priority, and the first indication information includes priority information.

In an implementation, when receiving the event report or the response message indicating that the event report fails to be obtained, the receiving unit 402 is specifically configured to: receive, from the policy control function network element, the event report or the response message indicating that the event report fails to be obtained; or receive, from a session management function network element, the event report or the response message indicating that the event report fails to be obtained.

In an implementation, when receiving, from the policy control function network element, the event report or the response message indicating that the event report fails to be obtained, the receiving unit 402 is specifically configured to receive, from the policy control function network element via a network exposure function network element, the event report or the response message indicating that the event report fails to be obtained.

When receiving, from the session management function network element, the event report or the response message indicating that the event report fails to be obtained, the receiving unit 402 is specifically configured to receive, from the session management function network element via the network exposure function network element, the event report or the response message indicating that the event report fails to be obtained.

In an implementation, when sending the first request message to the policy control function network element, the sending unit 401 is specifically configured to send the first request message to the policy control function network element via the network exposure function network element.

For more detailed descriptions of the sending unit 401 and the receiving unit 402, directly refer to related descriptions of the application function network element in the method embodiments shown in FIG. 2 and FIG. 3. Details are not described herein again.

FIG. 5 is a diagram of a structure of another communication apparatus according to an embodiment of this application. The communication apparatus may be a policy control function network element, or may be an apparatus (for example, a chip, a chip system, or a circuit) in the policy control function network element. As shown in FIG. 5, the communication apparatus 500 includes at least a receiving unit 501, a sending unit 502, and a processing unit 503.

The receiving unit 501 is configured to receive a first request message from an application function network element, where the first request message includes a request for subscription to a first event of a terminal device, first indication information, and a notification destination address of the application function network element, and the first indication information indicates to report an event report of the first event in real time and/or indicates to report the event report based on a priority.

The sending unit 502 is configured to send the event report or a response message indicating that the event report fails to be obtained to the application function network element based on the notification destination address of the application function network element in the first request message.

In an implementation, the first event is QoS monitoring.

In an implementation, the first indication information indicates to report the event report in real time, and the first indication information includes a time period or a time point for reporting.

In an implementation, the first indication information indicates to report the event report based on the priority, and the first indication information includes priority information.

In an implementation, the communication apparatus further includes:
the processing unit 503, configured to establish or update a PCC rule based on the first request message, and send the PCC rule to a session management function network element, where the PCC rule includes the request for subscription to the first event of the terminal device and the first indication information, and the PCC rule further includes the notification destination address of the application function network element or a notification destination address of the policy control function network element.

In an implementation, when the sending unit 502 sends the event report or the response message indicating that the event report fails to be obtained to the application function network element, specifically, the receiving unit 501 is further configured to receive, from the session management function network element, the event report or the response message indicating that the event report fails to be obtained; and the sending unit 502 sends the event report or the response message indicating that the event report fails to be obtained to the application function network element.

In an implementation, when sending the event report or the response message indicating that the event report fails to be obtained to the application function network element, the sending unit 502 is specifically configured to send the event report or the response message indicating that the event report fails to be obtained to the application function network element via a network exposure function network element.

In an implementation, when receiving the first request message from the application function network element, the receiving unit 501 is specifically configured to receive the first request message from the application function network element via the network exposure function network element.

For more detailed descriptions of the receiving unit 501, the sending unit 502, and the processing unit 503, directly refer to related descriptions of the policy control function network element in the method embodiments shown in FIG. 2 and FIG. 3. Details are not described herein again.

FIG. 6 is a diagram of a structure of still another communication apparatus according to an embodiment of this application. The communication apparatus may be a session management function network element, or may be an apparatus (for example, a chip, a chip system, or a circuit) in the session management function network element. As shown in FIG. 6, the communication apparatus 600 includes at least a receiving unit 601 and a sending unit 602.

The receiving unit 601 is configured to receive a PCC rule from a policy control function network element, where the PCC rule includes the request for subscription to a first event of the terminal device and the first indication information, the PCC rule further includes a notification destination address of an application function network element or a notification destination address of the policy control function network element, and the first indication information indicates to report an event report of the first event in real time and/or indicates to report the event report based on a priority.

The sending unit 602 is configured to send the event report or a response message indicating that the event report fails to be obtained.

In an implementation, the first event is QoS monitoring.

In an implementation, the first indication information indicates to report the event report in real time, and the first indication information includes a time period or a time point for reporting.

In an implementation, the first indication information indicates to report the event report based on the priority, and the first indication information includes priority information.

In an implementation, when sending the event report or the response message indicating that the event report fails to be obtained, the sending unit 602 is specifically configured to: send the event report or the response message indicating that the event report fails to be obtained to the application function network element based on the notification destination address of the application function network element in the PCC rule; or send the event report or the response message indicating that the event report fails to be obtained to the policy control function network element based on the notification destination address of the policy control function network element in the PCC rule.

In an implementation, the sending unit 602 is further configured to send a second request message to a user plane network element based on the PCC rule, where the second request message includes the request for subscription to the first event of the terminal device and the first indication information.

The receiving unit 601 is further configured to receive, from the user plane network element, the event report or the response message indicating that the event report fails to be obtained.

In an implementation, when sending the event report or the response message indicating that the event report fails to be obtained to the application function network element, the sending unit 602 is specifically configured to:
send the event report or the response message indicating that the event report fails to be obtained to the application function network element via a network exposure function network element.

For more detailed descriptions of the receiving unit 601 and the sending unit 602, directly refer to related descriptions of the session management function network element in the method embodiments shown in FIG. 2 and FIG. 3. Details are not described herein again.

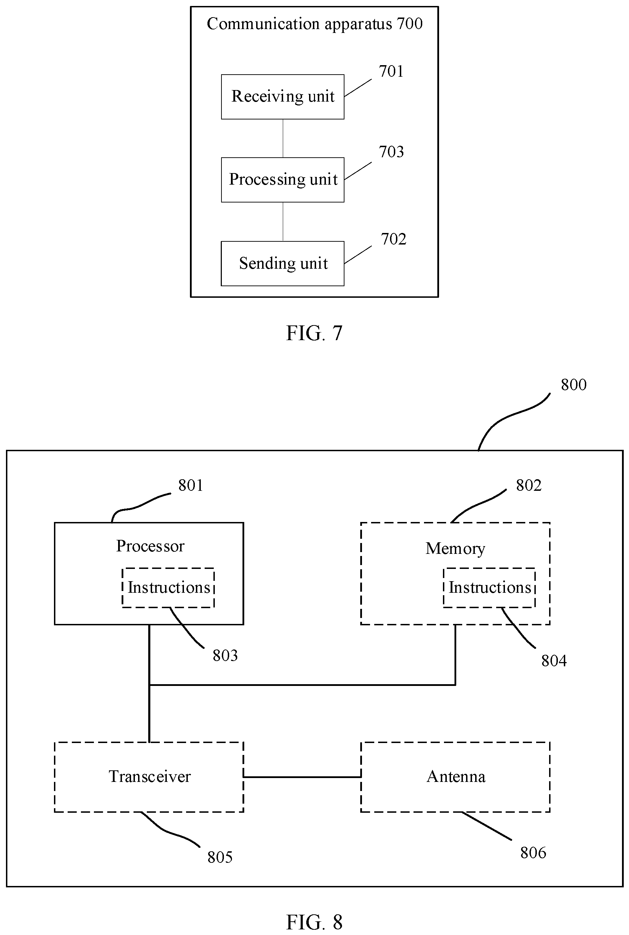

FIG. 7 is a diagram of a structure of still another communication apparatus according to an embodiment of this application. The communication apparatus may be a user plane network element, or may be an apparatus (for example, a chip, a chip system, or a circuit) in the user plane network element. As shown in FIG. 7, the communication apparatus 700 includes at least a receiving unit 701, a sending unit 702, and a processing unit 703.

The receiving unit 701 is configured to receive a second request message from a session management function network element, where the second request message includes a request for subscription to a first event of a terminal device and first indication information, and the first indication information indicates to report an event report of the first event in real time and/or indicates to report the event report based on a priority.

The sending unit 702 is configured to send the event report or a response message indicating that the event report fails to be obtained to the session management function network element.

In an implementation, the first event is QoS monitoring.

In an implementation, the first indication information indicates to report the event report in real time, and the first indication information includes a time period or a time point for reporting.

In an implementation, the first indication information indicates to report the event report based on the priority, and the first indication information includes priority information.

In an implementation, the communication apparatus further includes the processing unit 703.

The sending unit 702 sends the event report to the session management function network element, specifically,
the processing unit 703 is configured to obtain delay information between a user plane network element and an access network device;
the processing unit 703 is further configured to generate the event report based on delay information; and
the sending unit 702 is configured to send the event report to the session management function network element.

In an implementation, when sending the response message indicating that the event report fails to be obtained to the session management function network element, the sending unit 702 is specifically configured to: when the event report cannot be completed under a condition indicated by the first indication information, send the response message indicating that the event report fails to be obtained to the session management function network element.

In an implementation, the processing unit 703 is further configured to skip responding to the second request message in a case of session termination, bearer loss, resource allocation failure, or overload.

For more detailed descriptions of the receiving unit 701, the sending unit 702, and the processing unit 703, directly refer to related descriptions of the user plane network element in the method embodiments shown in FIG. 2 and FIG. 3. Details are not described herein again.

Based on the foregoing network architecture, FIG. 8 is a diagram of a structure of still another communication apparatus according to an embodiment of this application. As shown in FIG. 8, the apparatus 800 may include one or more processors 801. The processor 801 may also be referred to as a processing unit, and may implement a specific control function. The processor 801 may be a general-purpose processor, a dedicated processor, or the like. For example, the processor 801 may be a baseband processor or a central processing unit. The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

In an optional design, the processor 801 may alternatively store instructions 803 and/or data, and the instructions 803 and/or the data may be run by the processor, to enable the apparatus 800 to perform the method described in the foregoing method embodiments.

In another optional design, the processor 801 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 800 may include a circuit. The circuit may implement sending, receiving, or communication functions in the foregoing method embodiments.

Optionally, the apparatus 800 may include one or more memories 802. The memory may store instructions 804, and the instructions may be run on the processor, so that the apparatus 800 performs the method described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 800 may further include a transceiver 805 and/or an antenna 806. The processor 801 may be referred to as a processing unit, and controls the apparatus 800. The transceiver 805 may be referred to as a transceiver unit, a transceiver machine, a transceiver circuit, a transceiver apparatus, a transceiver module, or the like, and is configured to implement sending and receiving functions.

Optionally, the apparatus 800 in this embodiment of this application may be configured to perform the methods described in FIG. 2 and FIG. 3 in embodiments of this application.

In an embodiment, the communication apparatus 800 may be an application function network element, or may be an apparatus (for example, a chip, a chip system, or a circuit) in the application function network element. When computer program instructions stored in the memory 802 are executed, the transceiver 805 is configured to perform operations performed by the sending unit 401 and the receiving unit 402 in the foregoing embodiment. The transceiver 805 is further configured to send information to a communication apparatus other than the communication apparatus. The application function network element or the apparatus in the application function network element may be further configured to perform the methods performed by the application function network element in the method embodiments in FIG. 2 and FIG. 3. Details are not described again.

In an embodiment, the communication apparatus 800 may be a policy control function network element, or may be an apparatus (for example, a chip, a chip system, or a circuit) in the policy control function network element. When computer program instructions stored in the memory 802 are executed, the processor 801 is configured to perform operations performed by the processing unit 503 in the foregoing embodiment. The transceiver 805 is configured to perform operations performed by the receiving unit 501 and the sending unit 502 in the foregoing embodiment. The transceiver 805 is further configured to receive information from a communication apparatus other than the communication apparatus. The policy control function network element or the apparatus in the policy control function network element may be further configured to perform the methods performed by the policy control function network element in the method embodiments in FIG. 2 and FIG. 3. Details are not described again.

In an embodiment, the communication apparatus 800 may be a session management function network element, or may be an apparatus (for example, a chip, a chip system, or a circuit) in the session management function network element. When computer program instructions stored in the memory 802 are executed, the transceiver 805 is configured to perform operations performed by the receiving unit 601 and the sending unit 602 in the foregoing embodiment. The transceiver 805 is further configured to receive information from a communication apparatus other than the communication apparatus. The session management function network element or the apparatus in the session management function network element may be further configured to perform the methods performed by the session management function network element in the method embodiments in FIG. 2 and FIG. 3. Details are not described again.

In an embodiment, the communication apparatus 800 may be a user plane network element, or may be an apparatus (for example, a chip, a chip system, or a circuit) in the user plane network element. When computer program instructions stored in the memory 802 are executed, the processor 801 is configured to perform operations performed by the processing unit 703 in the foregoing embodiment. The transceiver 805 is configured to perform operations performed by the receiving unit 701 and the sending unit 702 in the foregoing embodiment. The transceiver 805 is further configured to receive information from a communication apparatus other than the communication apparatus. The user plane network element or the apparatus in the user plane network element may be further configured to perform the methods performed by the user plane network element in the method embodiments in FIG. 2 and FIG. 3. Details are not described again.

The processor and the transceiver that are described in this application may be implemented on an integrated circuit (integrated circuit, IC), an analog IC, a radio frequency integrated circuit (radio frequency interface chip, RFIC), a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an n-type metal-oxide-semiconductor (nMetal-oxide-semiconductor, NMOS), a p-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiment may be a first communication device or a second communication device. However, a range of the apparatus described in this application is not limited thereto, and a structure of the apparatus may not be limited to FIG. 8. The apparatus may be an independent device, or may be a part of a larger device. For example, the apparatus may be:
(1) an independent integrated circuit IC, a chip, a chip system, or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

An embodiment of this application further provides a computer-readable storage medium, and the computer-readable storage medium stores a computer program. When the program is executed by a processor, a procedure related to the application function network element in the method provided in the foregoing method embodiments may be implemented.

An embodiment of this application further provides a computer-readable storage medium, and the computer-readable storage medium stores a computer program. When the program is executed by a processor, a procedure related to the policy control function network element in the method provided in the foregoing method embodiments may be implemented.

An embodiment of this application further provides a computer-readable storage medium, and the computer-readable storage medium stores a computer program. When the program is executed by a processor, a procedure related to the session management function network element in the method provided in the foregoing method embodiments may be implemented.

An embodiment of this application further provides a computer-readable storage medium, and the computer-readable storage medium stores a computer program. When the program is executed by a processor, a procedure related to the user plane network element in the method provided in the foregoing method embodiments may be implemented.

An embodiment of this application further provides a computer program product. When the computer program product runs on a computer or a processor, the computer or the processor is enabled to perform one or more steps in any one of the foregoing methods. When each of component modules in the foregoing device is implemented in a form of a software functional unit and is sold or used as an independent product, the component modules may be stored in the computer-readable storage medium.

An embodiment of this application further provides a chip system, including at least one processor and a communication interface. The communication interface and the at least one processor are interconnected through a line. The at least one processor is configured to run a computer program or instructions to perform some or all steps recorded in the method embodiments corresponding to FIG. 2 and FIG. 3. The chip system may include a chip, or may include a chip and another discrete component.

An embodiment of this application further provides a communication system. The system includes an application function network element, a policy control function network element, a session management function network element, and a user plane network element. For specific descriptions, refer to the methods shown in FIG. 2 and FIG. 3.

It should be understood that the memory mentioned in embodiments of this application may be a volatile memory or a non-volatile memory, or may include a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example description but not a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be further understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification is intended to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the technology, or a part of the technical solutions may be implemented in a form of a software product. A computer software product is stored in a storage medium, and includes several instructions for indicating a computer device (which may be a personal computer, a server, a network device, or the like) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the method in embodiments of this application may be adjusted, combined, or removed based on an actual requirement.

The modules/units in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features, without departing from the scope of the technical solutions of embodiments of this application.

## Claims

1. A communication method, wherein the method is applied to an application function network element, and comprises:
sending a first request message to a policy control function network element, wherein the first request message comprises a request for subscription to a first event of a terminal device, first indication information, and a notification destination address of the application function network element, and the first indication information indicates to report an event report of the first event in real time and/or indicates to report the event report based on a priority; and
receiving the event report or a response message indicating that the event report fails to be obtained.

2. The method according to claim 1, wherein the first event is quality of service QoS monitoring.

3. The method according to claim 1 or 2, wherein the first indication information indicates to report the event report in real time, and the first indication information comprises a time period or a time point for reporting.

4. The method according to claim 1 or 2, wherein the first indication information indicates to report the event report based on the priority, and the first indication information comprises priority information.

5. The method according to any one of claims 1 to 4, wherein receiving the event report or the response message indicating that the event report fails to be obtained comprises:
receiving, from the policy control function network element, the event report or the response message indicating that the event report fails to be obtained; or
receiving, from a session management function network element, the event report or the response message indicating that the event report fails to be obtained.

6. The method according to claim 5, wherein receiving, from the policy control function network element, the event report or the response message indicating that the event report fails to be obtained comprises:
receiving, from the policy control function network element via a network exposure function network element, the event report or the response message indicating that the event report fails to be obtained; and
receiving, from the session management function network element, the event report or the response message indicating that the event report fails to be obtained comprises:
receiving, from the session management function network element via the network exposure function network element, the event report or the response message indicating that the event report fails to be obtained.

7. The method according to any one of claims 1 to 6, wherein sending the first request message to the policy control function network element comprises:
sending the first request message to the policy control function network element via the network exposure function network element.

8. A communication method, wherein the method is applied to a policy control function network element, and comprises:
receiving a first request message from an application function network element, wherein the first request message comprises a request for subscription to a first event of a terminal device, first indication information, and a notification destination address of the application function network element, and the first indication information indicates to report an event report of the first event in real time and/or indicates to report the event report based on a priority; and
sending the event report or a response message indicating that the event report fails to be obtained to an application function network element based on the notification destination address of the application function network element in the first request message.

9. The method according to claim 8, wherein the first event is quality of service QoS monitoring.

10. The method according to claim 8 or 9, wherein the first indication information indicates to report the event report in real time, and the first indication information comprises a time period or a time point for reporting.

11. The method according to claim 8 or 9, wherein the first indication information indicates to report the event report based on the priority, and the first indication information comprises priority information.

12. The method according to any one of claims 8 to 11, wherein the method further comprises:
establishing or updating a policy control and charging PCC rule based on the first request message, and sending the PCC rule to a session management function network element, wherein the PCC rule comprises the request for subscription to the first event of the terminal device and the first indication information, and the PCC rule further comprises the notification destination address of the application function network element or a notification destination address of the policy control function network element.

13. The method according to claim 12, wherein sending the event report or the response message indicating that the event report fails to be obtained to the application function network element comprises:
receiving, from the session management function network element, the event report or the response message indicating that the event report fails to be obtained; and
sending the event report or the response message indicating that the event report fails to be obtained to the application function network element.

14. A communication method, wherein the method is applied to a session management function network element, and comprises:
receiving a policy control and charging PCC rule from a policy control function network element, wherein the PCC rule comprises a request for subscription to a first event of a terminal device and first indication information, the PCC rule further comprises a notification destination address of an application function network element or a notification destination address of the policy control function network element, and the first indication information indicates to report an event report of the first event in real time and/or indicates to report the event report based on a priority; and
sending the event report or a response message indicating that the event report fails to be obtained.

15. The method according to claim 14, wherein the first event is quality of service QoS monitoring.

16. The method according to claim 14 or 15, wherein the first indication information indicates to report the event report in real time, and the first indication information comprises a time period or a time point for reporting.

17. The method according to claim 14 or 15, wherein the first indication information indicates to report the event report based on the priority, and the first indication information comprises priority information.

18. The method according to any one of claims 14 to 17, wherein sending the event report or the response message indicating that the event report fails to be obtained comprises:
sending the event report or the response message indicating that the event report fails to be obtained to the application function network element based on the notification destination address of the application function network element in the PCC rule; or
sending the event report or the response message indicating that the event report fails to be obtained to the policy control function network element based on the notification destination address of the policy control function network element in the PCC rule.

19. The method according to claim 18, wherein the method further comprises:
sending a second request message to a user plane network element based on the PCC rule, wherein the second request message comprises the request for subscription to the first event of the terminal device and the first indication information; and
receiving, from the user plane network element, the event report or the response message indicating that the event report fails to be obtained.

20. A communication method, wherein the method is applied to a user plane network element, and comprises:
receiving a second request message from a session management function network element, wherein the second request message comprises a request for subscription to a first event of a terminal device and first indication information, and the first indication information indicates to report an event report of the first event in real time and/or indicates to report the event report based on a priority; and
sending the event report or a response message indicating that the event report fails to be obtained to the session management function network element.

21. The method according to claim 20, wherein the first event is quality of service QoS monitoring.

22. The method according to claim 20 or 21, wherein the first indication information indicates to report the event report in real time, and the first indication information comprises a time period or a time point for reporting.

23. The method according to claim 20 or 21, wherein the first indication information indicates to report the event report based on the priority, and the first indication information comprises priority information.

24. The method according to any one of claims 20 to 23, wherein sending the event report to the session management function network element comprises:
obtaining delay information between the user plane network element and an access network device;
generating the event report based on the delay information; and
sending the event report to the session management function network element.

25. The method according to any one of claims 20 to 23, wherein sending the response message indicating that the event report fails to be obtained to the session management function network element comprises:
when the event report cannot be completed under a condition indicated by the first indication information, sending the response message indicating that the event report fails to be obtained to the session management function network element.

26. The method according to any one of claims 20 to 23, wherein the method further comprises:
skipping responding to the second request message in a case of session termination, bearer loss, resource allocation failure, or overload.

27. A communication apparatus, comprising:
a sending unit, configured to send a first request message to a policy control function network element, wherein the first request message comprises a request for subscription to a first event of a terminal device, first indication information, and a notification destination address of the application function network element, and the first indication information indicates to report an event report of the first event in real time and/or indicates to report the event report based on a priority; and
a receiving unit, configured to receive the event report or a response message indicating that the event report fails to be obtained.

28. The apparatus according to claim 27, wherein the first event is quality of service QoS monitoring.

29. The apparatus according to claim 27 or 28, wherein the first indication information indicates to report the event report in real time, and the first indication information comprises a time period or a time point for reporting.

30. The apparatus according to claim 27 or 28, wherein the first indication information indicates to report the event report based on the priority, and the first indication information comprises priority information.

31. The apparatus according to any one of claims 27 to 30, wherein when receiving the event report or the response message indicating that the event report fails to be obtained, the receiving unit is specifically configured to:
receive, from the policy control function network element, the event report or the response message indicating that the event report fails to be obtained; or
receive, from a session management function network element, the event report or the response message indicating that the event report fails to be obtained.

32. The apparatus according to claim 31, wherein when receiving, from the policy control function network element, the event report or the response message indicating that the event report fails to be obtained, the receiving unit is specifically configured to receive, from the policy control function network element via a network exposure function network element, the event report or the response message indicating that the event report fails to be obtained; and
when receiving, from the session management function network element, the event report or the response message indicating that the event report fails to be obtained, the receiving unit is specifically configured to receive, from the session management function network element via the network exposure function network element, the event report or the response message indicating that the event report fails to be obtained.

33. The apparatus according to any one of claims 27 to 32, wherein when sending the first request message to the policy control function network element, the sending unit is specifically configured to send the first request message to the policy control function network element via the network exposure function network element.

34. A communication apparatus, comprising:
a receiving unit, configured to receive a first request message from an application function network element, wherein the first request message comprises a request for subscription to a first event of a terminal device, first indication information, and a notification destination address of the application function network element, and the first indication information indicates to report an event report of the first event in real time and/or indicates to report the event report based on a priority; and
a sending unit, configured to send the event report or a response message indicating that the event report fails to be obtained to an application function network element based on the notification destination address of the application function network element in the first request message.

35. The apparatus according to claim 34, wherein the first event is quality of service QoS monitoring.

36. The apparatus according to claim 34 or 35, wherein the first indication information indicates to report the event report in real time, and the first indication information comprises a time period or a time point for reporting.

37. The apparatus according to claim 34 or 35, wherein the first indication information indicates to report the event report based on the priority, and the first indication information comprises priority information.

38. The apparatus according to any one of claims 34 to 37, wherein the apparatus further comprises:
a processing unit, configured to establish or update a policy control and charging PCC rule based on the first request message, and send the PCC rule to a session management function network element, wherein the PCC rule comprises the request for subscription to the first event of the terminal device and the first indication information, and the PCC rule further comprises the notification destination address of the application function network element or a notification destination address of the policy control function network element.

39. The apparatus according to claim 38, wherein the receiving unit is further configured to receive, from the session management function network element, the event report or the response message indicating that the event report fails to be obtained; and
when sending the event report or the response message indicating that the event report fails to be obtained to the application function network element, the sending unit is specifically configured to:
send the event report or the response message indicating that the event report fails to be obtained to the application function network element.

40. A communication apparatus, comprising:
a receiving unit, configured to receive a policy control and charging PCC rule from a policy control function network element, wherein the PCC rule comprises the request for subscription to a first event of the terminal device and the first indication information, the PCC rule further comprises a notification destination address of an application function network element or a notification destination address of the policy control function network element, and the first indication information indicates to report an event report of the first event in real time and/or indicates to report the event report based on a priority; and
a sending unit, configured to send the event report or a response message indicating that the event report fails to be obtained.

41. The apparatus according to claim 40, wherein the first event is quality of service QoS monitoring.

42. The apparatus according to claim 40 or 41, wherein the first indication information indicates to report the event report in real time, and the first indication information comprises a time period or a time point for reporting.

43. The apparatus according to claim 40 or 41, wherein the first indication information indicates to report the event report based on the priority, and the first indication information comprises priority information.

44. The apparatus according to any one of claims 40 to 43, wherein when sending the event report or the response message indicating that the event report fails to be obtained, the sending unit is specifically configured to:
send the event report or the response message indicating that the event report fails to be obtained to the application function network element based on the notification destination address of the application function network element in the PCC rule; or
send the event report or the response message indicating that the event report fails to be obtained to the policy control function network element based on the notification destination address of the policy control function network element in the PCC rule.

45. The apparatus according to claim 44, wherein the sending unit is further configured to send a second request message to a user plane network element based on the PCC rule, wherein the second request message comprises the request for subscription to the first event of the terminal device and the first indication information; and
the receiving unit is further configured to receive, from the user plane network element, the event report or the response message indicating that the event report fails to be obtained.

46. A communication apparatus, comprising:
a receiving unit, configured to receive a second request message from a session management function network element, wherein the second request message comprises a request for subscription to a first event of a terminal device and first indication information, and the first indication information indicates to report an event report of the first event in real time and/or indicates to report the event report based on a priority; and
a sending unit, configured to send the event report or a response message indicating that the event report fails to be obtained to the session management function network element.

47. The apparatus according to claim 46, wherein the first event is quality of service QoS monitoring.

48. The apparatus according to claim 46 or 47, wherein the first indication information indicates to report the event report in real time, and the first indication information comprises a time period or a time point for reporting.

49. The apparatus according to claim 46 or 47, wherein the first indication information indicates to report the event report based on the priority, and the first indication information comprises priority information.

50. The apparatus according to any one of claims 46 to 49, wherein the apparatus further comprises:
a processing unit, configured to: obtain delay information between a user plane network element and an access network device, and generate the event report based on the delay information, wherein
when sending the event report to the session management function network element, the sending unit is specifically configured to:
send the event report to the session management function network element.

51. The apparatus according to any one of claims 46 to 49, wherein when sending the response message indicating that the event report fails to be obtained to the session management function network element, the sending unit is specifically configured to:
when the event report cannot be completed under a condition indicated by the first indication information, send the response message indicating that the event report fails to be obtained to the session management function network element.

52. The apparatus according to any one of claims 46 to 49, wherein the processing unit is further configured to skip responding to the second request message in a case of session termination, bearer loss, resource allocation failure, or overload.

53. A communication apparatus, comprising a processor and a memory, wherein the processor is configured to execute a computer program or instructions in the memory, and when the computer program or the instructions are executed by the processor, the apparatus is enabled to perform the method according to any one of claims 1 to 7, or implement the method according to any one of claims 8 to 13, or implement the method according to any one of claims 14 to 19, or implement the method according to any one of claims 20 to 26.

54. A computer-readable storage medium, wherein the computer-readable storage medium stores a computer program or computer instructions, and when the computer program or the computer instructions are executed by a processor, the method performed by the policy control function network element according to any one of claims 1 to 7 is implemented, or the method performed by the session management function network element according to any one of claims 8 to 13 is implemented, or the method performed by the user plane network element according to any one of claims 14 to 19 is implemented, or the method performed by the application function network element according to any one of claims 20 to 26 is implemented.

55. A chip system, comprising at least one processor, a memory, and an interface circuit, wherein the memory, the interface circuit, and the at least one processor are interconnected through a line, the at least one memory stores instructions, and when the instructions are executed by the processor, the method performed by the policy control function network element according to any one of claims 1 to 7 is implemented, or the method performed by the session management function network element according to any one of claims 8 to 13 is implemented, or the method performed by the user plane network element according to any one of claims 14 to 19 is implemented, or the method performed by the application function network element according to any one of claims 20 to 26 is implemented.
